# FASCICULE DE BREVET EUROPEEN

(11) **EP 0 797 329 B1**
(45) Date de publication et mention de la délivrance du brevet: **30.05.2007**
(21) Numéro de dépôt: 97400324.6
(22) Date de dépôt: 13.02.1997
(51) Int. Cl.: H04L 9/08, H04L 9/30

(54) **Méthode pour établir des communications sécurisées et système de chiffrement/déchiffrement associé**
Verfahren zur Herstellung sicherer Verbindungen, und Verschlüsselungs/Entschlüsselungs-Gerät dazu
Method for establishing secure communications, and corresponding encrypting/decrypting system

(30) Priorité: 21.03.1996 FR 9604093
(43) Date de publication de la demande: 24.09.1997
(73) Titulaire: Alcatel Lucent, 75008 Paris (FR)
(72) Inventeur: Maldy, Jacques, Le Val Saint-Germain, 91530 Saint Cheron (FR)
(74) Mandataire: Lamoureux, Bernard

(56) Documents cités:
- EP-A- 0 254 812
- EP-A- 0 436 799
- EP-A- 0 719 045

## Description

L'invention concerne les communications sécurisées et plus particulièrement les communications utilisant un système de chiffrement/déchiffrement à clé publique.

Avec le développement des ordinateurs personnels, le transfert d'information électronique, c'est-à-dire sous forme numérique, s'est rapidement accru. Le courrier électronique est maintenant une application largement utilisée dans les entreprises pour l'échange de toute sorte d'information, le cas échéant des informations de nature confidentielle.

Pour préserver cette confidentialité, il est primordial que cette information passe de l'envoyeur au destinataire sans qu'un tiers ait la possibilité, en cas d'interception de la communication, d'interpréter le contenu de cette information. Des systèmes de chiffrement/déchiffrement ont ainsi été développés, en particulier les systèmes de chiffrement/déchiffrement dits à clé publique.

Pour établir une communication sécurisée entre deux utilisateurs à l'aide d'un système de chiffrement/déchiffrement à clé publique, chaque utilisateur génère d'abord une paire de clés, l'une étant une clé secrète et l'autre étant une clé publique. Chaque utilisateur conserve sa clé secrète et transmet par tout moyen sa clé publique à l'autre utilisateur. Si le premier utilisateur décide de transmettre en sécurité une information au second utilisateur, il chiffre cette information avec la clé publique du second utilisateur qui seul pourra la déchiffrer à l'aide de sa propre clé secrète. Inversement, si le second utilisateur décide de transmettre en sécurité une information au premier utilisateur, il chiffre cette information avec la clé publique de ce premier utilisateur qui seul pourra la déchiffrer avec sa propre clé secrète. Des communications sécurisées peuvent donc être facilement établies entre un grand nombre d'utilisateurs qui génèrent eux-mêmes leur paire de clés mais il n'existe pas de moyen de contrôler l'extension du réseau d'utilisateurs. Ce problème peut être résolu en générant au niveau d'un centre les paires de clés des utilisateurs. Cette solution induit toutefois un autre problème. En effet, il est nécessaire que la clé secrète d'un utilisateur lui soit communiquée en sécurité ce qui exclut toute communication électronique. En pratique, les clés secrètes des utilisateurs doivent être transmises physiquement aux utilisateurs ce qui peut devenir lourd à gérer en présence d'un grand nombre d'utilisateurs. Une telle méthode de génération et de distribution de paires de clé est divulguée par le document EP 254 812.

Le but de l'invention est de proposer une solution pour établir des communications sécurisées entre des utilisateurs à l'aide d'un système de chiffrement/déchiffrement à clé publique qui permet de contrôler le déploiement du réseau d'utilisateurs tout en ne présentant pas les inconvénients indiqués ci-dessus.

L'invention s'applique tout particulièrement au contrôle d'un réseau d'utilisateurs au sein d'une organisation, comme une entreprise.

A cet effet, l'invention a pour objet une méthode pour établir des communications sécurisées entre des utilisateurs à l'aide d'un système de chiffrement/déchiffrement à clé publique, comprenant les étapes suivantes:
- un centre génère une paire de clés incluant une clé secrète et une clé publique,
- la clé publique du centre est fournie à un utilisateur,
- l'utilisateur génère sa propre paire de clés incluant une clé secrète et une clé publique caractérisée par le fait que l'utilisateur ne connaît pas sa propre clé publique et que la clé publique de l'utilisateur est chiffrée avec la clé publique du centre,
- l'utilisateur transmet au centre sa propre clé publique chiffrée avec la clé publique du centre,
- le centre déchiffre la clé publique de l'utilisateur et si cet utilisateur est agréé par le centre, le centre retransmet à l'utilisateur la clé publique de celui-ci chiffrée avec elle-même.

De la sorte, il n'est pas nécessaire de transférer physiquement les clés secrètes des utilisateurs du centre vers ces derniers. Par ailleurs, les clés publiques des utilisateurs restent sous contrôle du centre qui peut agréer au cas par cas chaque utilisateur comme faisant partie du réseau.

Selon un mode de réalisation particulier de l'invention, chaque utilisateur transmet au centre sa propre clé secrète chiffrée avec la clé publique du centre de sorte que le centre est toujours en mesure de déchiffrer les informations chiffrées détenues par les utilisateurs agréés du réseau.

L'invention s'étend à un système de chiffrement/déchiffrement à clé publique destiné à être utilisé par un utilisateur agrée du réseau. Ce système comprend un équipement pour générer une paire de clés incluant une clé secrète et une clé publique et l'équipement est conçu de telle manière que la clé publique générée est automatiquement chiffrée avec une autre clé fournie avec l'équipement, en particulier la clé publique du centre. Cet agencement interdit par conséquent aux utilisateurs la possibilité de diffuser les clés publiques au stade de leur fabrication. Avantageusement, cet équipement est agencé pour n'accepter en entrée que des clés publiques chiffrées avec la clé publique qu'il a généré, ces clés publiques étant conservées en mémoire dans l'équipement sous cette forme chiffrée. De la sorte, au niveau de chaque système de chiffrement/déchiffrement d'un utilisateur, il est impossible d'obtenir directement la clé publique de l'utilisateur ou les clés publiques des utilisateurs avec qui cet utilisateur peut établir une communication sécurisée.

L'invention sera encore mieux comprise à la lecture de la description qui suit faite en référence avec les figures.
La figure 1 illustre schématiquement une première étape de la méthode selon l'invention.
La figure 2 illustre schématiquement une seconde étape de cette méthode.
La figure 3 illustre d'autres étapes de cette méthode.
La figure 4 illustre une première variante de cette méthode.
La figure 5 illustre une seconde variante de cette méthode.

Un système de chiffrement/déchiffrement à clé publique permet de générer une paire de clés incluant une clé publique et une clé secrète, de chiffrer des données à transmettre avec une clé publique d'un destinataire et de déchiffrer des données reçues à partir de la clé secrète générée localement par l'utilisateur du système. Un tel système est connu en soi.

Dans le cadre de l'invention, le système de chiffrement/déchiffrement d'un utilisateur comporte un équipement conçu spécialement pour mettre en oeuvre une méthode d'établissement de communications sécurisées avec un contrôle centralisé des clés publiques des utilisateurs du réseau.

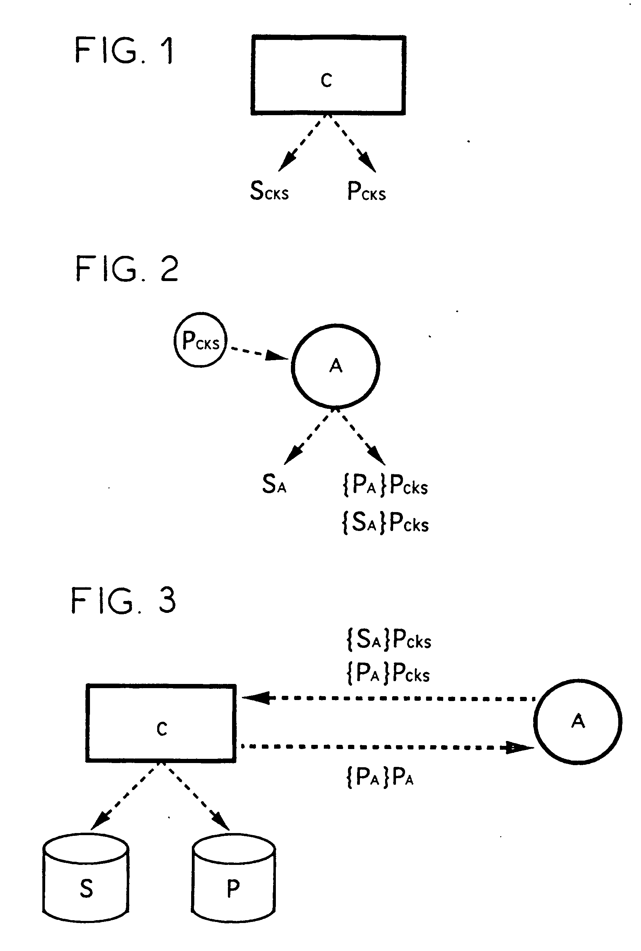

Plus particulièrement à la figure 1, au début de la constitution du réseau, un centre C génère à l'aide d'un système de chiffrement/déchiffrement classique en soi, une paire de clés incluant une clé secrète Scks et une clé publique Pcks.

La clé publique Pcks du centre est fournie à un utilisateur, comme l'utilisateur A, avec un système de chiffrement/déchiffrement selon l'invention.

Figure 2, l'utilisateur A génère à l'aide de son système de chiffrement/déchiffrement une paire de clés incluant une clé secrète Sa et une clé publique Pa mais l'équipement de son système est conçu pour chiffrer automatiquement sa clé publique Pa avec la clé qui lui a été fournie, c'est-à-dire la clé publique du centre. A ce stade de conception des clés de l'utilisateur, l'utilisateur n'a pas accès directement à sa clé publique. Il connaît seulement sa clé secrète.

Figure 3, l'utilisateur A transmet au centre C, via un réseau de communication électronique, sa clé publique Pa chiffrée avec la clé publique Pcks du centre (comme indiqué par {Pa}Pcks sur la figure 3). Le cas échéant, l'utilisateur A transmet au centre C, par le même canal, sa clé secrète Sa chiffrée avec la clé publique Pcks du centre (comme indiqué par {Sa}Pcks sur la figure 3).

Le centre C déchiffre la clé publique Pa de l'utilisateur A à l'aide de sa clé secrète Scks et le cas échéant, la clé secrète Sa de l'utilisateur. Si cet utilisateur est reconnu par le centre C comme un utilisateur agréé, le centre C conserve dans un premier fichier P la clé publique Pa de cet utilisateur et le cas échéant, dans un second fichier S, la clé secrète Sa de cet utilisateur.

Le centre C retransmet ensuite à l'utilisateur A qui vient d'être agréé, la clé publique Pa de l'utilisateur chiffrée avec elle-même (comme indiqué par {Pa}Pa sur la figure 3).

L'équipement du système de chiffrement/déchiffrement de l'utilisateur est conçu de telle manière à n'accepter en entrée que des clés publiques chiffrées avec la clé publique qu'il a générée. Il accepte par conséquent, la clé publique Pa de l'utilisateur A chiffrée avec elle-même et conserve en mémoire cette clé publique Pa sous sa forme chiffrée. A ce stade, l'utilisateur ne peut pas connaître sa propre clé publique et ne peut pas établir de communications en sécurité avec d'autres utilisateurs agréés par le centre.

Au niveau du centre, les fichiers S et P servent à l'archivage des clés publiques et des clés secrètes des utilisateurs agrées. Les messages chiffrés transmis ultérieurement par ces utilisateurs pourront toujours être déchiffrés par le centre.

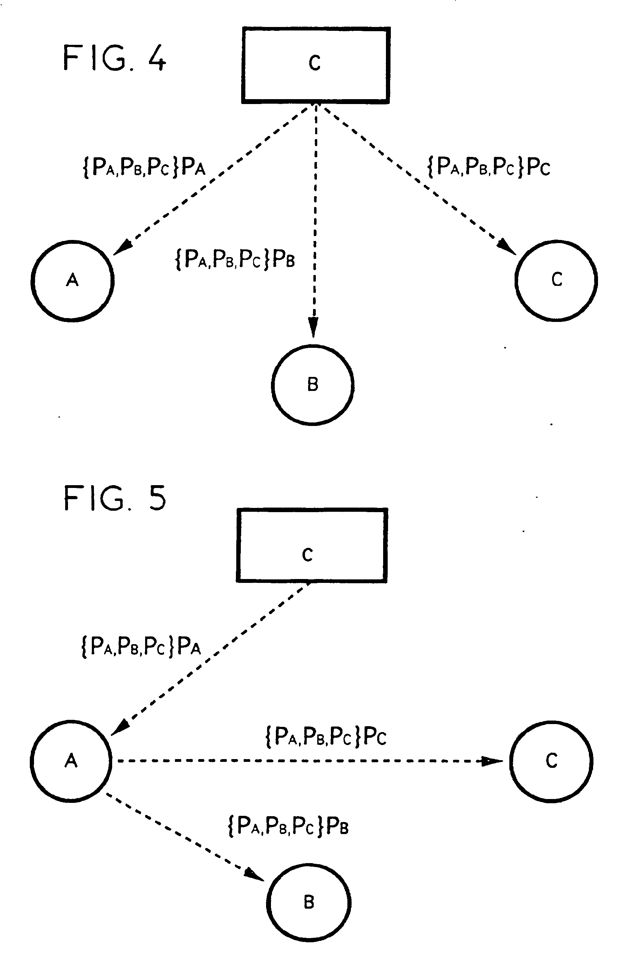

Figure 4, pour établir la possibilité d'une communication sécurisée entre plusieurs utilisateurs agréés, le centre C transmet à chaque utilisateur agréé, ici les utilisateurs A,B et C, une liste de clés publiques chiffrée avec la clé publique de l'utilisateur destinataire (comme indiqué par {Pa,Pb,Pc}Pa pour l'utilisateur A ou {Pa,Pb,Pc}Pb pour l'utilisateur B ou {Pa,Pb,Pc}Pc pour l'utilisateur C sur la figure 4). Chaque clé publique de la liste correspond à la clé publique d'un utilisateur agréé par le centre. Les clés publiques communiquées à un utilisateur sont conservées en mémoire dans le système de chiffrement/déchiffrement de cet utilisateur sous leur forme chiffrée ce qui empêche leur libre diffusion.

A ce stade, chaque utilisateur destinataire d'une liste de clés publiques est agréé par le centre et reçoit uniquement les clés publiques d'autres utilisateurs agréés par le centre. Chaque utilisateur ne connaît toujours pas directement sa propre clé publique ni les clés publiques des autres utilisateurs avec qui il peut entrer en communication. Pour chaque système de chiffrement/déchiffrement d'un utilisateur particulier, l'équipement assure la correspondance entre les clés publiques conservées en mémoire sous forme chiffrée et les identificateurs des utilisateurs avec lesquels cet utilisateur particulier peut communiquer en sécurité.

En variante, comme illustré sur la figure 5, le centre C transmet à un utilisateur particulier, ici l'utilisateur A, une liste de clés publiques chiffrée avec la clé publique Pa de cet utilisateur. Puis cet utilisateur particulier A transmet cette liste de clés publiques vers d'autres utilisateurs comme B et C dont les clés publiques font partie de la liste en chiffrant à chaque fois la liste de clés avec la clé publique du destinataire, Pb ou Pc.

## Revendications

1. Une méthode pour établir des communications sécurisées entre des utilisateurs (A,B,C) à l'aide d'un système de chiffrement/déchiffrement à clé publique, comprenant les étapes suivantes:
- un centre (C) génère une paire de clés incluant une clé secrète (Scks) et une clé publique (Pcks),
- la clé publique (Pcks) du centre (C) est fournie à un utilisateur (A)
- l'utilisateur (A) génère sa propre paire de clés incluant une clé secrète (Sa) et une clé publique (Pa) **caractérisée par le fait que** l'utilisateur ne connaît pas sa propre clé publique et que ladite clé publique (Pa) de l'utilisateur (A) est chiffrée avec la clé publique (Pcks) du centre,
- l'utilisateur (A) transmet au centre (C) sa propre clé publique (Pa) chiffrée avec la clé publique (Pcks) du centre,
- le centre (C) déchiffre la clé publique (Pa) de l'utilisateur (A) et si cet utilisateur est agréé par le centre, le centre retransmet à l'utilisateur (A) la clé publique (Pa) de celui-ci chiffrée avec elle-même.

2. La méthode selon la revendication 1, incluant en outre l'étape selon laquelle le centre (C) transmet à chaque utilisateur agréé (A,B,C), une liste de clés publiques (Pa,Pb,Pc) chiffrée avec la clé publique (Pa,Pb,Pc) de l'utilisateur correspondant.

3. La méthode selon la revendication 1, incluant en outre l'étape selon laquelle le centre (C) transmet à un utilisateur particulier agréé (A), une liste de clés publiques (Pa,Pb,Pc) chiffrée avec la clé publique (Pa) de cet utilisateur particulier et cet utilisateur particulier (A) transmet à un autre utilisateur (B,C), cette liste de clés publiques chiffrée avec la clé publique (Pb,Pc) de cet autre utilisateur.

4. La méthode selon la revendication 1, selon laquelle l'utilisateur (A) transmet au centre (C) sa propre clé secrète (Sa) chiffrée avec la clé publique (Pcks) du centre.

5. Un système de chiffrement/déchiffrement à clé publique pour la mise en oeuvre de la méthode selon la de plus revendication 1, **caractérisé de plus en ce qu'**il comprend un équipement pour générer une paire de clés incluant une clé secrète Sa, Sb, Sc et une clé publique (Pa,Pb,Pc), cet équipement étant conçu de telle manière que l'utilisateur ne connaît pas sa propre clé publique et que la clé publique générée est automatiquement chiffrée avec la clé publique (Pcks) du centre fournie à l'équipement.

6. Le système selon la revendication 5, dans lequel l'équipement est conçu de telle manière à n'accepter en entrée que des clés publiques chiffrées avec la clé publique qu'il a générée.

7. Le système selon la revendication 6, dans lequel l'équipement est conçu de telle manière à conserver en mémoire chaque clé publique chiffrée avec la clé publique qu'il a générée.

8. Le système selon la revendication 5, dans lequel cette autre clé est la clé publique d'un centre.

## Claims

1. A method for setting up secure calls between users (A,B,C) with the aid of a public key encryption/decryption system, comprising the following steps:
- a centre (C) generates a pair of keys including a secret key (Scks) and a public key (Pcks),
- the public key (Pcks)of the centre (C) is supplied to a user (A),
- the user (A) generates his own pair of keys including a secret key (Sa) and a public key (Pa), **characterised in that** the user does not know his own public key and said public key (Pa) of the user (A) is encrypted with the public key (Pcks) of the centre.
- the user (A) transits to the centre (C) his own public key (Pa) encrypted with the public key (Pcks) of the centre,
- the centre (C) decrypts the public key (Pa) of the user (A) and, if that user is approved by the centre, the centre retransmits to the user (A) the public key (Pa) of the latter encrypted with itself.

2. The method according to claim 1, further including the step whereby the centre (C) transmits to each approved user (A,B,C) a list of public keys (Pa,Pb,Pc) encrypted with the public key (Pa,Pb,Pc) of the corresponding user.

3. The method according to claim 1, further including the step whereby the centre (C) transmits to a particular approved user (A) a list of public keys (Pa,Pb,Pc) encrypted with the public key (Pa) of that particular user and that particular user (A) transmits to another user (B,C) that list of public keys encrypted with the public key (Pb,Pc) of that other user.

4. The method according to claim 1, wherein the user (A) transmits to the centre (C) his own secret key (Sa) encrypted with the public key (Pcks) of the centre.

5. A public key encryption/decryption system for implementing the method according to claim 1, **characterised** moreover in that it comprises an equipment for generating a pair of keys including a secret key Sa,Sb,Sc and a public key (Pa,Pb,Pc), that equipment being designed so that the user does not know his own public key and the public key generated is automatically encrypted with the public key (Pcks) of the centre supplied to the equipment.

6. The system according to claim 5, wherein the equipment is designed to accept as input only public keys encrypted with the public key that it has generated.

7. The system according to claim 6, wherein the equipment is designed to hold in memory each public key encrypted with the public key that it has generated.

8. The system according to claim 5, wherein that other key is the public key of a centre.

## Patentansprüche

1. Ein Verfahren zur Herstellung sicherer Verbindungen zwischen Benutzern (A, B, C) mit Hilfe eines Verschlüsselungs-/Entschlüsselungssystems mit öffentlichem Schlüssel, das die folgenden Schritte beinhaltet:
- eine Zentrale (C) generiert ein Schlüsselpaar, das einen geheimen Schlüssel (Scks) und einen öffentlichen Schlüssel (Pcks) einschließt,
- der öffentliche Schlüssel (Pcks) der Zentrale (C) wird an einen Benutzer (A) geliefert,
- der Benutzer (A) generiert sein eigenes Schlüsselpaar, das einen geheimen Schlüssel (Sa) und einen öffentlichen Schlüssel (Pa) einschließt, **dadurch gekennzeichnet, dass** der Benutzer seinen eigenen öffentlichen Schlüssel nicht kennt und dass dieser öffentliche Schlüssel (Pa) des Benutzers (A) mit dem öffentlichen Schlüssel (Pcks) der Zentrale verschlüsselt wird,
- der Benutzer (A) übermittelt seinen eigenen öffentlichen Schlüssel (Pa), der mit dem öffentlichen Schlüssel (Pcks) der Zentrale verschlüsselt ist, an die Zentrale (C),
- die Zentrale (C) entschlüsselt den öffentlichen Schlüssel (Pa) des Benutzers (A) und wenn dieser Benutzer von der Zentrale zugelassen ist, überträgt die Zentrale an den Benutzer (A) den mit sich selbst verschlüsselten öffentlichen Schlüssel (Pa) des Benutzers.

2. Verfahren gemäß Anspruch 1, das außerdem den Schritt einschließt, gemäß dem die Zentrale (C) an jeden zugelassenen Benutzer (A, B, C) eine Liste mit öffentlichen Schlüsseln (Pa, Pb, Pc) übermittelt, die mit dem öffentlichen Schlüssel (Pa, Pb, Pc) des entsprechenden Benutzers verschlüsselt ist.

3. Verfahren gemäß Anspruch 1, das außerdem einen Schritt einschließt, gemäß dem die Zentrale (C) an einen besonderen zugelassenen Benutzer (A) eine Liste von öffentlichen Schlüsseln (Pa, Pb, Pc) übermittelt, die mit dem öffentlichen Schlüssel (Pa) dieses besonderen Benutzers verschlüsselt ist, und von diesem besonderen Benutzer (A) wird diese Liste mit öffentlichen Schlüsseln, die mit dem öffentlichen Schlüssel (Pb, Pc) dieses anderen Benutzers verschlüsselt ist, an einen anderen Benutzer (B, C) übermittelt.

4. Verfahren gemäß Anspruch 1, gemäß dem der Benutzer (A) der Zentrale (C) seinen eigenen geheimen Schlüssel (Sa), der mit dem öffentlichen Schlüssel (Pcks) der Zentrale verschlüsselt ist, übermittelt.

5. Ein Verschlüsselungs-/Entschlüsselungssystem mit Öffentlichem Schlüssel zur Durchführung des Verfahrens gemäß Anspruch 1, das außerdem **dadurch gekennzeichnet ist, dass** es eine Ausrüstung zur Generierung eines Schlüsselpaares enthält, das einen geheimen Schlüssel (Sa, Sb, Sc) und einen öffentlichen Schlüssel (Pa, Pb, Pc) einschließt, wobei diese Ausrüstung so konzipiert ist, dass der Benutzer seinen eigenen öffentlichen Schlüssel nicht kennt und der generierte öffentliche Schlüssel autommisch mit dem öffentlichen Schlüssel (Pcks) der Zentrale, der an die Ausrüstung geliefert wurde, verschlüsselt wird.

6. System gemäß Anspruch 5, bei dem die Ausrüstung so konzipiert ist, dass sie am Eingang nur öffentliche Schlüssel akzeptiert, die mit dem von ihr erzeugten öffentlichen Schlüssel verschlüsselt sind.

7. System gemäß Anspruch 6, bei dem die Ausrüstung so konzipiert ist, dass sie im Speicher jeden öffentlichen Schlüssel aufbewahrt, der mit dem von ihm erzeugten öffentlichen Schlüssel verschlüsselt ist.

8. System gemäß Anspruch 5, bei dem dieser andere Schlüssel der öffentliche Schlüssel einer Zentrale ist.
